Europäisches Patentamt

European Patent Office

Office européen des brevets

(11) Veröffentlichungsnummer: **0 283 731**
**B1**

(12) **EUROPÄISCHE PATENTSCHRIFT**

(45) Veröffentlichungstag der Patentschrift:
19.12.90

(51) Int. Cl.⁵: **C08L 35/06, C08L 25/04**

(21) Anmeldenummer: **88102522.5**

(22) Anmeldetag: **20.02.88**

(54) **Mit funktionalisierten Polymeren schlagzäh modifizierte Thermoplaste und deren Verwendung zur Herstellung von Formteilen.**

(30) Priorität: **25.02.87 DE 3706016**

(43) Veröffentlichungstag der Anmeldung:
**28.09.88 Patentblatt 88/39**

(45) Bekanntmachung des Hinweises auf die Patenterteilung:
**19.12.90 Patentblatt 90/51**

(84) Benannte Vertragsstaaten:
**AT BE DE FR GB IT NL**

(56) Entgegenhaltungen:
**EP-A- 0 211 395**
**DE-A- 3 140 565**

(73) Patentinhaber: **BASF Aktiengesellschaft,
Carl-Bosch-Strasse 38, D-6700 Ludwigshafen(DE)**

(72) Erfinder: **Bronstert, Klaus, Dr., Gartenstr. 26,
D-6719 Carlsberg(DE)**
Erfinder: **Schwaben, Hans-Dieter, Dr., Lindenstr. 3,
D-6721 Freisbach(DE)**
Erfinder: **Echte, Adolf, Dr., Leuschnerstr. 42,
D-6700 Ludwigshafen(DE)**

## Beschreibung

Die Erfindung betrifft schlagzäh modifizierte Thermoplastmischungen. Derartige Mischungen werden zur Herstellung von Formteilen verwendet.

Zur Schlagzähmodifizierung von Styrol-Acrylnitril-Copolymeren wird eine Weichphase zugemischt, die üblicherweise in einer mehrstufigen Emulsionspolymerisation hergestellt wird. Dies ist bekannt und z.B. in der Publikation von C.B. Bucknall "Toughened Plastics", Applied Science Publishers Ltd., London, 1977, insbesondere Seiten 90ff beschrieben.

Die hierzu nötigen Emulsionspolymerisate sind aufwendig, teuer und nur schwer reproduzierbar herzustellen, wobei insbesondere die mangelnde Gleichmäßigkeit der Pfropfhülle in verschiedenen Ansätzen zu Schwankungen in der Produktqualität führen kann.

Es sind aus der DE-A 3 140 565 schon Weichkomponenten für die Schlagzähausrüstung von Polystyrol bekannt, die durch den Einbau von (u.a.) Aminogruppen aufweisenden Comonomeren verändert sind und mit einer entsprechend (nämlich mit Maleinsäureanhydrid) modifizierten Polystyrol-Hartmatrix eine innige Verbindung eingehen, wobei die Vorstellung besteht, daß zwischen Carbonsäure-Resten einerseits und Aminogruppen andererseits gewisse Wechselwirkungen auftreten, die eine günstige Wirkung haben.

Die Einfügung von Aminogruppen in die Weichphase durch (radikalisch ausgelösten) Einbau entsprechender Comonomeren erfolgt aber offenbar in sehr unkontrollierter Weise.

Damit stellt sich die Aufgabe, eine Weichkomponente zu finden, die einfach, preisgünstig und gut reproduzierbar herzustellen ist und mit der die Thermoplastkomponente schlagzäh modifiziert werden kann.

Diese Aufgabe wurde durch Bereitstellung einer Thermoplastmischung gemäß Patentanspruch 1 gelöst.

Nachfolgend werden der Aufbau der erfindungsgemäßen Thermoplastmischungen sowie das zu ihrer Herstellung verwendete Verfahren und die erforderlichen Ausgangsstoffe und Hilfsmittel beschrieben.

Die Thermoplastmischungen enthalten die Komponenten A, B und gegebenenfalls C. Bevorzugte Thermoplastmischungen bestehen aus den Komponenten A und B. Die Mischungen können noch übliche Zusatzstoffe als Komponente C in üblichen Mengen enthalten.

Die polymere Formmasse besteht, jeweils bezogen auf die Summe der Gewichte aus A und B:

A) 99-60, bevorzugt 95-65, Gew.% einer polymeren Hartmatrix

Die polymere Hartmatrix kann einpolymerisiert enthalten, bezogen auf A, die folgenden Sorten und Mengen an Monomeren

a1) 60-99,5, bevorzugt 65-99 Gew.%,
a2) 0,5-20, bevorzugt 0,5-10 Gew.%
außerdem kann die Hartmatrix enthalten die Monomeren
a3) 0-35, bevorzugt 0 bis 30 Gew.%.

B) 1-40, bevorzugt 5 bis 35, Gew.% einer polymeren Weichkomponente

Die polymere Weichkomponente kann einpolymerisiert enthalten die Monomeren, bezogen auf B

b1) 100-60, bevorzugt 100-70 Gew.%,
b2) 0-40, bevorzugt 0 bis 30 Gew.%.

Bezogen auf 100 Gewichtsteile der Summe der Komponenten A und B kann die polymere Formmasse 0 bis 30, bevorzugt 0-25 Gewichtsteile der Komponente C, das sind übliche Zusatzstoffe, enthalten.

Im einzelnen besteht die Formmasse aus

Komponente A

Sie enthält

a1) mindestens ein vinylaromatisches Monomeres mit 8 bis 12 C-Atomen. Vorzugsweise wird ausschließlich Styrol verwendet. Außerdem enthält sie
a2) ein mit a1) copolymerisierbares ungesättigtes Carbonsäureanhydrid. Vorzugsweise wird Maleinsäureanhydrid verwendet. Als weitere Comonomere
a3) können mindestens ein Alkenylnitril anwesend sein. Vorzugsweise wird Acrylnitril eingesetzt.

Das Molekulargewicht der Komponente A liegt im Bereich zwischen 50 000 und 400 000 g/mol, bevorzugt zwischen 100 000 und 300 000 g/mol bestimmt aus Messungen der Grenzviskosität und berechnet nach der Mark-Houwink-Gleichung.

Die polymere Masse wird durch eine an sich bekannte radikalische Polymerisation in Masse, Lösung oder Suspension hergestellt. Diese Verfahren sind dem Fachmann bekannt (vgl. z.B. US-A 4 551 510 und B.C. Trivedi und B.M. Culbertson in der Publikation "Maleinic Anhydride" Chapter 9, 10 und 11, Plenum Press, New York [1982]), so daß es weiterer Erläuterungen nicht bedarf. Bei ihrer Herstellung können die üblichen Radikalstarter, wie z.B. organische Peroxide oder Azoverbindungen, ferner die üblicherweise eingesetzten Molekulargewichtsregler, wie Merkaptane, außerdem Stabilisatoren etc. eingesetzt werden.

Komponente B

Sie enthält

b1) als Ausgangsmonomer mindestens ein 1,3-Dien. Vorzugsweise wird ausschließlich Butadien verwendet. Als weitere Ausgangscomonomere können

b2) Monovinylaromaten, vorzugsweise Styrol, eingesetzt werden.

Die Thermoplastkomponente B muß mit Aminogruppen terminiert sein.

Die polymere Komponente B wird hergestellt z.B. durch anionische Polymerisation von Butadien und Abbruch mit 1,5-Diazabicyclo[3,1,0]hexan. Das Verfahren ist in der EP-A-211 395 ausführlich beschrieben, so daß eine zusätzliche Beschreibung hier entfallen kann.

Das Molekulargewicht der Komponente B liegt im Bereich zwischen 30000 und 400000 g/mol (Gewichtsmittel), vorzugsweise zwischen 50000 und 300000 g/mol, insbesondere zwischen 60000 und 250000 g/mol, bestimmt mittels Gelparmeationschromatographie.

Bevorzugt als polymerer Ausgangsstoff für die Komponente B sind Homopolybutadiene bzw. Blockcopolymerisate des Butadiens mit einem Anteil von bis zu 40 Gew.% Styrol. Der Übergang zwischen den Blöcken kann scharf oder verschmiert sein.

Komponente C

Als Zusatzstoffe bei der Herstellung der erfindungsgemäßen Formmassen können, wie dem Fachmann bekannt, Mineralöle, Antistatika, Flammschutzmittel, Pigmente, Stabilisatoren und andere die Gebrauchseigenschaften verbessernde übliche Zuschläge in Mengen von 0 bis 30, bevorzugt 0 bis 25 Gew.%, bezogen auf 100 Gewichtsteile der Summe aus den Komponenten A und B, eingesetzt werden.

Die Herstellung der Mischungen kann durch beliebige Einrichtungen, die eine homogene Durchmischung der Komponenten A und B in der Schmelze erlauben, wie z.B. Walzwerke, Kneter oder Extruder, erfolgen. Dabei können beide Komponenten, gegebenenfalls auch die Komponente C, vorher gemischt oder getrennt dosiert werden. Die Herstellungstemperatur liegt zwischen 150 und 350°C, vorzugsweise zwischen 200 und 300°C.

Möglich, aber weniger bevorzugt, ist auch das Mischen der Lösungen der Komponente A und B, gefolgt von einer anschließenden Entfernung des Lösungsmittels.

Die nachfolgenden Beispiele und Vergleichsversuche sollen die Erfindung näher erläutern, ohne jedoch ihre Breite zu schmälern. Es wurden jeweils 10 Gew.% der Komponente B und 90 Gew.% der Komponente A verwendet.

In den Beispielen 1 bis 3 wurde ein Zweiblockcopolymeres aus 9 Gew.% Styrol und 91 Gew.% Butadien mit scharfem Blockübergang und einem Molekulargewicht (GPC-Mittel) von 75000 g/mol eingesetzt, bei dem das Polybutadienende mit einer 1,3-Propylendiaminendgruppe gemäß deutscher Patentanmeldung P 35 27 909 [EP-A 211 395] Beispiel 3 modifiziert war.

In den entsprechenden Vergleichsversuchen (VV) wurden als Komponente B ein nicht funktionalisiertes Homopolybutadien mit einer Lösungsviskosität von 130 ml/g (5 gew.%ig in Toluol bei 25°C) eingesetzt.

Die Polymeren der Komponente A sind in den Beispielen näher spezifiziert.

Die Herstellung der Formmassen erfolgte auf einem Zweischneckenextruder ZSK 30 der Fa. Werner und Pfleiderer bei Temperaturen zwischen 250 und 300°C. Die als Polymerstränge austretenden Formmassen wurden im Wasserbad abgekühlt, dann granuliert, getrocknet und anschließend gemäß folgender Normen geprüft:

1. die Lochkerbschlagzähigkeit aKL in kJ/m² nach DIN 53753
2. die Schlagzähigkeit aN in kJ/m² nach DIN 53453
3. die Reißfestigkeit RF in N/mm² nach DIN 53455

Beispiel 1 und Vergleichsversuch 1

Als Komponente A wurde hier ein Terpolymerisat aus 75 Gew.-Teilen Styrol, 24 Gew.-Teilen Acrylnitril und einem Gew.-Teil Maleinsäureanhydrid mit einer Viskositätszahl VZ von 76 (0,5 gew.%ig in Dimethylformamid - DMF - bei 25°C) eingesetzt.

3

Beispiel 2 und Vergleichsversuch 2

Hier wurde als Komponente A ein Copolymeres aus 94,5 Gew.-Teilen Styrol und 5,5 Gew.-Teilen Maleinsäureanhydrid mit einer VZ von 79 (0,5 gew.%ig in DMF bei 25°C) eingesetzt.

Beispiel 3 und Vergleichsversuch 3

Hier wurde als Komponente A ein Copolymeres aus 99 Gew.-Teilen Styrol und einem Gew.-Teil Maleinsäureanhydrid mit einer VZ von 70 (0,5 gew.%ig in DMF bei 25°C) eingesetzt.

| Tabelle | | | | |
|---|---|---|---|---|
| | aKL (kJ/m$^2$) | aN (kJ/m$^2$) | RF (N/mm$^2$) | aKL (kJ/m$^2$) des nicht modifizierten Thermoplasten |
| Bsp. 1 | 10,5 | 18,4 | 49,0 | 3,1 |
| VV. 1 | 4,3 | 6,2 | 37,4 | 3,1 |
| Bsp. 2 | 5,3 | 11,3 | 40,4 | 2,7 |
| VV. 2 | 4,7 | 7,9 | 26,3 | 2,7 |
| Bsp. 3 | 6,3 | 14,6 | 35,5 | 2,8 |
| VV. 3 | 5,7 | 9,3 | 29,7 | 2,8 |

**Patentansprüche**

1. Schlagzäh modifizierte Thermoplastmischungen aus den Komponenten A, B und gegebenenfalls C, bestehend aus:
A) 99 bis 60 Gewichtsprozent, bezogen auf die Summe aus A und B, einer polymeren Hartmatrix, bestehend aus
a1) 60-99,5 Gewichtsprozent eines einpolymerisierten Vinylaromaten,
a2) 0,5-20 Gewichtsprozent eines einpolymerisierten ungesättigten Carbonsäureanhydrids und
a3) 0-35 Gewichtsprozent eines einpolymerisierten Alkenylnitrils, wobei die Gewichtsprozente jeweils bezogen sind auf die Summe aus a1, a2 und a3,
B) 1 bis 40 Gewichtsprozent, bezogen auf die Summe aus A und B, einer polymeren Weichkomponente, bestehend aus
b1) 100-60 Gewichtsprozent eines einpolymerisierten Monomeren aus der Gruppe der 1,3-Diene und
b2) 0-40 Gewichtsprozent eines einpolymerisierten Vinylaromaten, wobei die Gewichtsprozente jeweils bezogen sind auf die Summe aus b1 und b2
sowie
C) 0 bis 30 Gewichtsprozent, bezogen auf 100 Gewichtsteile der Summe aus den Komponenten A und B, übliche Zusatzstoffe,
dadurch gekennzeichnet, daß die Polymeren der Weichkomponente B endständig mit Aminogruppen versehen sind.
2. Verwendung der schlagzäh modifizierten Thermoplastmischung nach Anspruch 1 zur Herstellung von Formteilen.

**Claims**

1. An impact modified thermoplastic blend of components A, B and optionally C, consisting of:
A) from 99 to 60 percent by weight, based on the sum total of A and B, of a polymeric hard matrix consisting of
a1) 60–99.5 percent by weight of an aromatic vinyl compound present as copolymerized units,
a2) 0.5–20 percent by weight of an unsaturated carboxylic anhydride present as copolymerized units and
a3) 0–35 percent by weight of an alkenylnitrile present as copolymerized units, the weight percentages in each case being based on the sum total of a1, a2 and a3,
B) from 1 to 40 percent by weight, based on the sum total of A and B, of a polymeric softening component consisting of
b1) 100–60 percent by weight of a monomer from the group of the 1,3-dienes which is present as copolymerized units and
b2) 0–40 percent by weight of an aromatic vinyl compound present as copolymerized units, the weight percentages in each case being based on the sum total of b1 and b2, and also

# EP 0 283 731 B1

C) from 0 to 30 percent by weight, based on 100 parts by weight of the sum total of components A and B, of customary additives, wherein the polymer of softening component B has been provided with amino end groups.

2. The use of an impact modified thermoplastic blend as claimed in claim 1 for the production of shaped articles.

## Revendications

1. Mélanges thermoplastiques modifiés à résistance élevée aux chocs de constituants A, B et éventuellement C, constitués de:

A) 99 à 60% en poids, par rapport à la somme de A et de B, d'une matrice d'un polymère constituée de
a1) 60–99,5% en poids de composé aromatique vinylique
a2) 0,5–20% en poids d'anhydride d'acide carboxylique insaturé destiné à être polymérisé et
a3) 0–35% en poids de nitrile d'alcényle, dans laquelle les pourcentages en poids sont respectivement calculés par rapport à la somme de a1, a2 et a3,

B) 1 à 40% en poids, par rapport à la somme de A et de B, d'un constituant polymère mou constitué de
b1) 100–60% en poids d'un monomère destiné à être polymérisé sur le groupe 1,3-diène et
b2) 0–40% en poids d'un composé aromatique vinylique polymérisable, dans lequel les pourcentages en poids sont chaque fois calculés par rapport à la somme de b1 et b2, ainsi que

C) 0 à 30% en poids, par rapport aux 100 parties en poids de la somme des constituants A et B d'additifs usuels,

caractérisés en ce que le polymère au constituant polymère mou B est muni en fin de chaîne de groupes amino.

2. Utilisation du mélange thermoplastique modifié à résistance élevée aux chocs selon la revendication 1 pour la préparation de pièces moulées.